# EUROPÄISCHE PATENTANMELDUNG

(11) **EP 3 296 695 A1**
(43) Veröffentlichungstag der Anmeldung: **21.03.2018**
(21) Anmeldenummer: 17189866.1
(22) Anmeldetag: 07.09.2017
(51) Int. Cl.: G01C 21/32, G01C 21/34

(54) **VERFAHREN UND DATENVERARBEITUNGSANLAGE ZUR ERZEUGUNG VON KARTENDATEN EINER DIGITALEN KARTE**

(30) Priorität: 15.09.2016 DE 102016217653
(71) Anmelder: Bayerische Motoren Werke Aktiengesellschaft, 80809 München (DE)
(72) Erfinder: BEHRENDT, Stephan, 82152 Planegg (DE); LOTTES, Alexander, 85551 Kirchheim b. München (DE)

(57) **Zusammenfassung**

Vorgeschlagen wir ein Verfahren zur Erzeugung von Kartendaten einer digitalen Karte aus Rohdaten der digitalen Karte, wobei die Rohdaten zumindest ein Kartenobjekt umfassen, wobei zur Erzeugung der Kartendaten dem zumindest einen Kartenobjekt ein Wert eines Attributs zugewiesen werden kann. Erfindungsgemäß betrifft das Attribut eine das Kartenobjekt betreffende Antriebsart eines Kraftfahrzeugs. Auf diese Weise kann ein Fahrzeug oder ein fahrzeugexternes mit der Fahrtplanung befasstes System mit verbesserten Informationen ausgestattet werden.

## Beschreibung

Die vorliegende Erfindung betrifft ein Verfahren zur Erzeugung von Kartendaten einer digitalen Karte aus Rohdaten der digitalen Karte sowie eine Datenverarbeitungsanlage hierzu.

Digitalen Karten kommt in einer modernen Gesellschaft eine stetig wachsende Bedeutung zu. Abdeckungsgrad, Genauigkeit und Aktualität digitaler Karten werden fortlaufend verbessert. Nutzer können digitale Karten nicht mehr nur an stationären Computern (z.B. Personal Computer, PC) nutzen, sondern auch mittels tragbarer Mobilgeräte (z.B. Smartphones) sowie in Navigationssystemen moderner Kraftfahrzeuge. Digitale Karten werden heutzutage nicht mehr ausschließlich für die Routenplanung genutzt, sondern auch für zahlreiche andere Dienste, die unter dem englischsprachigen Sammelbegriff "Location-based services" bekannt sind.

Die technische Ausgestaltung einer digitalen Karte sowie die Art und der Umfang der in der Karte enthaltenen Kartenobjekte können je nach Anwendungszweck und / oder Anbieter der Karte stark variieren. Es hat sich daher als zweckmäßig erwiesen, zur Erzeugung von Kartendaten einer digitalen Karte Rohdaten der digitalen Karte zu verwenden und diese derart zu verarbeiten und / oder zu ergänzen, dass eine digitale Karte mit den gewünschten Eigenschaften entsteht. Der Vorgang der Erzeugung von Kartendaten einer digitalen Karte aus Rohdaten der digitalen Karte wird auch als Kompilierung bezeichnet.

Beispielsweise können bei der Kompilierung Kartenobjekte (z.B. points of interest, POI) hinzugefügt werden. Ferner können bestehenden Kartenobjekten Attribute zugewiesen werden. So können beispielsweise einem Straßenabschnitt (in diesem Zusammenhang auch mit dem Begriff "Link" bezeichnet) Attribute wie z.B. "Straßentyp" zugewiesen werden.

Besonders für die Nutzung in Kraftfahrzeugen spielen digitale Karten eine immer größere Rolle. Wurde noch vor wenigen Jahren der Begriff des Kraftfahrzeugs sehr stark mit verbrennungsmotorisch angetriebenen Fahrzeugen verknüpft, so ist inzwischen durch den Vormarsch alternativ angetriebener Kraftfahrzeuge eine große Vielfalt entstanden. Rein elektrisch betriebene Kraftfahrzeuge ("BEV" für engl. "battery electric vehicle") sind inzwischen ebenso bekannt wie Hybridfahrzeuge ("(P)HEV" für engl. "(Plug-in) hybrid electric vehicle"), welche über einen elektrischen und einen verbrennungsmotorischen Antrieb verfügen.

Unter manchen Umständen ist es wünschenswert oder sogar vorgeschrieben, ein Fahrzeug nicht verbrennungsmotorisch zu betreiben. Beispielsweise ist bekannt, dass in Großstädten mit hoher Lärm- und / oder Schadstoffbelastung die Nutzung verbrennungsmotorisch angetriebener Kraftfahrzeuge eingeschränkt werden kann. Ein BEV kann dann gleichwohl genutzt werden, ebenso wie ein HEV im rein elektrischen Fahrmodus. Um den derartigen Randbedingungen unterworfenen Betrieb eines Kraftfahrzeugs besser steuern und / oder planen zu können, ist es wünschenswert, das Fahrzeug oder auch fahrzeugexterne mit der Fahrtplanung befasste Systeme mit bezüglich dieser Randbedingungen verbesserten Informationen auszustatten.

Diese Aufgabe wird gelöst bei einem Verfahren und einer Datenverarbeitungsanlage mit den Merkmalen der unabhängigen Ansprüche. Vorteilhafte Weiterbildungen der Erfindung sind Gegenstände der abhängigen Ansprüche.

Das erfindungsgemäße Verfahren dient der Erzeugung von Kartendaten einer digitalen Karte aus Rohdaten der digitalen Karte. Die Rohdaten umfassen zumindest ein Kartenobjekt wie beispielsweise einen Straßenabschnitt ("Link") und einen Verbindungsknoten ("Node"). Zur Erzeugung der Kartendaten kann dem zumindest einen Kartenobjekt ein Wert eines Attributs zugewiesen werden. Ein Attribut kann in diesem Zusammenhang auch als Eigenschaft des Kartenobjekts beschrieben werden. Beispielsweise ist bekannt, einem Straßenabschnitt dessen zulässige Höchstgeschwindigkeit als Attribut zuzuordnen.

Kennzeichnend für die Erfindung ist, dass das Attribut eine das Kartenobjekt betreffende Antriebsart eines Kraftfahrzeugs betrifft. Mit anderen Worten werden also durch das erfindungsgemäße Verfahren die Kartenobjekte der Kartendaten durch ein Attribut angereichert, das sich auf die Antriebsart eines Kraftfahrzeugs bezieht.

Auf diese Weise gelingt es der Erfindung, die digitale Karte um Informationen zu (beispielsweise zulässigen, unzulässigen, vorteilhaften, etc.) Antriebsarten von Kraftfahrzeugen zu ergänzen. Diese Informationen können in vielfältiger Weise von Nutzern der Kartendaten verwendet werden. Beispielsweise kann ein Navigationssystem des Kraftfahrzeugs die Informationen bei der Fahrt- und / oder Routenplanung berücksichtigen. Ein Energiemanagementsystem des Kraftfahrzeugs kann die Informationen beispielsweise zur Ladeplanung der Fahrzeugbatterie verwenden. Ebenso können die Informationen von fahrzeugexternen Systemen verwendet werden, die die Kartendaten nutzen, z.B. von Systemen zur Routenplanung oder von Systemen zur Steuerung (insbesondere autonom betriebener) Fahrzeugflotten.

Der Begriff der Antriebsart ist in Zusammenhang mit der vorliegenden Erfindung weit gefasst zu verstehen. Mit besonderem Vorteil kann die Antriebsart einen oder beliebige mehrere der folgenden Aspekte des Kraftfahrzeugs explizit umfassen:
- Energieträger, z.B. fossile Brennstoffe (Benzin, Diesel, Erdgas, Flüssiggas), Wasserstoff, elektrische Batterie;
- Bauart des Antriebsmotors, z.B. Elektromotor, Verbrennungsmotor (Otto, Diesel);
- Abgasnachbehandlungssystem, z.B. Katalysator, Partikelfilter, SCR;
- Schadstoffemission, z.B. ausgestoßene Menge CO, CO₂, NOₓ, insbesondere auch Schadstoffklasse, z.B. Euro 1 bis Euro 6;
- akustische Emission, z.B. Angabe in dB(A).

Vorzugsweise betrifft das Attribut eine das Kartenobjekt betreffende vorgeschriebene oder unzulässige Antriebsart des Kraftfahrzeugs. Es sind insbesondere im Zusammenhang mit der (akustischen und/oder Schadstoff-) Emissionsbelastung in Ballungsräumen behördliche Vorgaben zum eingeschränkten Betrieb von Kraftfahrzeugen bekannt. Insbesondere ist bekannt, in bestimmten Zonen und/oder zu bestimmten Zeiten Fahrzeuge mit einer bestimmten Antriebsart auszuschließen oder umgekehrt nur Fahrzeuge mit einer bestimmten Antriebsart zuzulassen. Beispielsweise könnte in einem innerstädtischen Bereich
- der Betrieb von Kraftfahrzeugen mit Dieselmotor unzulässig sein;
- ausschließlich der Betrieb von BEVs zulässig sein;
- der Betrieb von Fahrzeugen mit einer Schadstoffklasse Euro 4 oder niedriger (Euro 1, 2, 3) unzulässig sein.

Mit besonderem Vorteil kann dem Attribut ein Wert für eine gemischte, insbesondere zeitlich gemischte und / oder in Bezug auf einen Energieträger und / oder eine Bauart eines Antriebsmotors gemischte, Antriebsart zugewiesen werden. Der Wert des Attributs für eine gemischte Antriebsart kann einzelne vorgegebene (z.B. zulässige oder unzulässige) Antriebsarten sowie deren Anteile umfassen. Beispielsweise könnte durch eine behördliche Vorgabe vorgeschrieben sein, dass Kraftfahrzeuge mit einem Anteil von mindestens 50 Prozent elektromotorisch betrieben werden müssen. Ist diese Vorgabe nicht weiter eingeschränkt, so könnte beispielsweise ein HEV mindestens 50 Prozent der Zeit rein elektromotorisch (und in der übrigen Zeit auch verbrennungsmotorisch) fahren (zeitlich gemischte Antriebsart). Auch könnte das HEV die gesamte Zeit mit einer zu mindestens 50 Prozent durch den Elektromotor des Kraftfahrzeugs erzeugten Antriebsleistung fahren (in Bezug auf eine Bauart eines Antriebsmotors gemischte Antriebsart). Weiter beispielsweise könnte durch eine behördliche Vorgabe vorgeschrieben sein, dass Kraftfahrzeuge mit einem Anteil von höchstens 50 Prozent mit Dieselkraftstoff betrieben werden dürfen. In diesem Fall könnte ein Kraftfahrzeug mit Diesel- und Erdgastank mindestens 50 Prozent der Zeit mit Erdgas betrieben werden (in Bezug auf einen Energieträger gemischte Antriebsart).

In weiterer Ausgestaltung des erfindungsgemäßen Verfahrens kann zur Erzeugung der Kartendaten dem zumindest einen Kartenobjekt ein Wert eines weiteren Attributs zugewiesen werden, wobei das weitere Attribut eine zeitliche Gültigkeit des ersten Attributs betrifft. Wie vorstehend anhand von Beispielen bereits erläutert wurde, können mittels des ersten Attributs behördliche Vorgaben abgebildet werden. Derartige Vorgaben gelten häufig nur zeitlich begrenzt, beispielsweise nur in Zeiten starken Verkehrsaufkommens. Diese zeitliche Gültigkeitsdauer kann durch den Wert des zweiten Attributs abgebildet werden, so dass dem Nutzer der digitalen Karte noch weiter verbesserte Informationen zur Verfügung stehen.

Mit Vorteil ist das zumindest eine Kartenobjekt ein Straßenabschnitt oder umfasst einen Straßenabschnitt. Ein Straßenabschnitt wird in Zusammenhang mit digitalen Karten auch mit dem englischsprachigen Fachbegriff "Link" bezeichnet. Links können beispielsweise einen zwischen zwei Ab- oder Zufahrtsmöglichkeiten ("nodes") einer Straße gelegenen Abschnitt repräsentieren. Typischerweise liegt die Länge eines Links zwischen wenigen Metern und wenigen hundert Metern. Es ist bekannt, einem Link ein diesen betreffendes Attribut zuzuordnen, z.B. die in diesem Straßenabschnitt zulässige Höchstgeschwindigkeit. Auch Vorgaben bezüglich der Antriebsart, z.B. Einschränkungen eines verbrennungsmotorischen Betriebs, werden sich in der Regel auf Straßen beziehen. Es ist daher vorteilhaft, wenn das erfindungsgemäße Attribut einem Link zugeordnet wird.

Weiter vorteilhaft lässt sich das erfindungsgemäße Verfahren ausgestalten, indem die Rohdaten zumindest eine dem zumindest einen Kartenobjekt zugeordnete geografische Positionsangabe umfassen, wobei dem zumindest einen Kartenobjekt ein Wert eines Attributs in Abhängigkeit der geografischen Positionsangabe zugewiesen werden kann. Einem in den Rohdaten enthalten Kartenobjekt ist dann also dessen geografische Positionsangabe zugeordnet. Diese Angabe kann beim Kompilieren verwendet werden, um den Wert des Attributs zuzuweisen. Es kann insbesondere beim Kompilieren geprüft werden, ob an der geografischen Position des Kartenobjekts eine Vorgabe für die Antriebsart vorliegt und in den Kartendaten der digitalen Karte gespeichert werden soll. Ist dies der Fall, so kann dem Kartenobjekt der der Vorgabe entsprechende Wert des Attributs zugewiesen werden.

Mit besonderem Vorteil wird hierzu ein Regelsatz verwendet. Dieser gibt jeweils einen Wert des Attributs in Abhängigkeit zumindest einer geografischen Bereichsangabe eines geografischen Bereichs vor. Für das zumindest eine Kartenobjekt wird geprüft, ob die dem Kartenobjekt zugeordnete geografische Positionsangabe mindestens teilweise innerhalb des geografischen Bereichs liegt. Wenn das der Fall ist, wird der durch den Regelsatz vorgegebene Wert des Attributs zugewiesen.

Häufig gilt eine die Antriebsart betreffende Vorgabe für ein einen geografischen Bereich, z.B. eine innerstädtische Zone, einen Ring um ein Stadtgebiet, ein Landschaftsschutzgebiet etc. Ein solcher geografischer Bereich wird durch die geografische Bereichsangabe abgebildet. Beim Kompilieren der digitalen Karte wird geprüft, ob die dem Kartenobjekt zugeordnete geografische Positionsangabe mindestens teilweise innerhalb des geografischen Bereichs liegt. Mit anderen Worten wird also geprüft, ob das Kartenobjekt von der Vorgabe betroffen ist. In dem Regelsatz ist für diesen Fall ein Wert des Attributs hinterlegt, z.B. eine Beschränkung auf eine rein elektromotorische Antriebsart in einer innerstädtischen Zone.

Dabei kann vorgesehen sein, dass einem Kartenobjekt der durch den Regelsatz vorgegebene Wert des Attributs nur dann zugewiesen wird, wenn die dem Kartenobjekt zugeordnete geografische Positionsangabe vollständig innerhalb des geografischen Bereichs liegt. Alternativ kann vorgesehen sein, dass einem Kartenobjekt der durch den Regelsatz vorgegebene Wert des Attributs auch dann zugewiesen wird, wenn die dem Kartenobjekt zugeordnete geografische Positionsangabe nur teilweise innerhalb des geografischen Bereichs liegt. Dies kann dann vorkommen, wenn es sich bei der geografischen Positionsangabe nicht um eine einzige geografische Koordinate (also einen Punkt) handelt, sondern um eine eine räumliche Ausdehnung beschreibende Positionsangabe (also eine Linie oder Fläche). Dies trifft beispielsweise bei Straßenabschnitten zu, deren Positionsangabe in der Regel zumindest eine Anfangs- und Endkoordinate umfasst. Ein solcher Straßenabschnitt kann sich beispielsweise über den Rand eines geografischen Bereichs hinaus erstrecken.

Es kann der Fall auftreten, dass die dem Kartenobjekt zugeordnete geografische Positionsangabe jeweils teilweise in zwei oder mehr geografischen Bereichen liegt. Mit anderen Worten kann sich das Kartenobjekt teilweise in einem geografischen Bereich und teilweise in einem anderen geografischen Bereich befinden. So kann beispielsweise ein Straßenabschnitt von einem geografischen Bereich in einen weiteren angrenzenden geografischen Bereich führen. In diesem Fall kann mit besonderem Vorteil vorgesehen sein, dass der Kartencompiler dem Kartenobjekt den jeweils "strengeren" Wert des Attributs zuweist, also beispielsweise den Wert, der eine strengere Vorgabe bezüglich der Antriebsart repräsentiert. Alternativ kann vorgesehen sein, dass der Kartencompiler eingerichtet ist, das Kartenobjekt an der Grenze oder den Grenzen der aneinander angrenzenden geografischen Bereiche aufzuteilen. Somit entstehen dann aus dem einen Kartenobjekt der Rohdaten mehrere Kartenobjekte der Kartendaten, von denen jedes vollständig innerhalb eines der geografischen Bereiche liegt.

Besonders vorteilhaft ist es, wenn die geografische Bereichsangabe ein durch zumindest drei geografische Koordinaten bestimmtes Polygon ist. Auf diese Weise kann der geografische Bereich besonders effizient angegeben werden. Somit kann der Regelsatz besonders kompakt und einfach formuliert werden.

Die Erfindung wird ferner gebildet durch eine Datenverarbeitungsanlage zur Erzeugung von Kartendaten einer digitalen Karte aus Rohdaten der digitalen Karte. Die erfindungsgemäße Datenverarbeitungsanlage ist eingerichtet zur Durchführung des erfindungsgemäßen Verfahrens.

Weitere Ausführungsformen der Erfindung werden nachfolgend anhand einer beispielhaften Darstellung erläutert. Dabei zeigen
- Fig. 1: eine Ausführungsform einer Datenverarbeitungsanlage in schematischer Darstellung und
- Fig. 2: eine vereinfachte Darstellung geografischer Bereiche.

Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden.

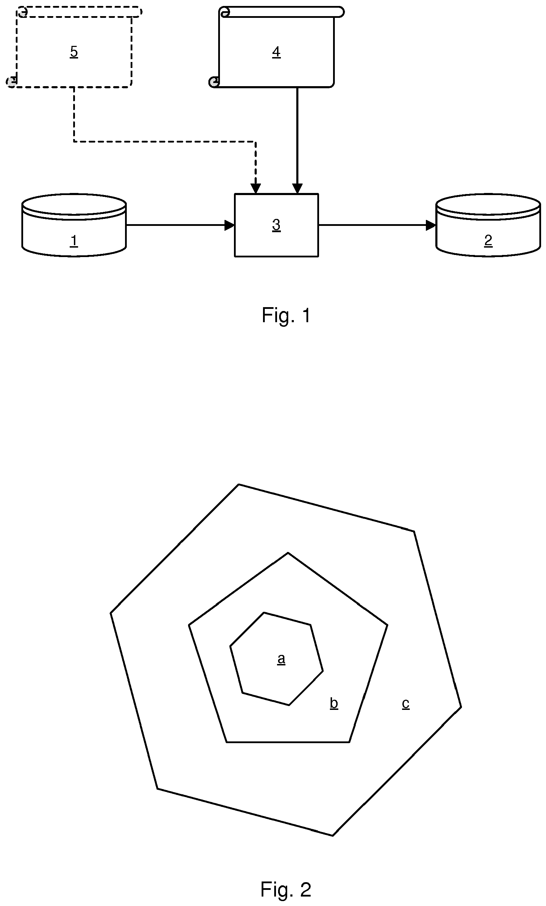

Fig. 1 zeigt eine Datenverarbeitungsanlage 3, die auch als Compiler 3 oder Kartencompiler 3 bezeichnet werden kann. In einem Datenspeicher 1 sind Rohdaten 1 der digitalen Karte abgelegt. In einem weiteren Datenspeicher 2 werden die Kartendaten 2 der digitalen Karte abgelegt. Die Datenspeicher 1, 2 können jeweils ein Teil der Datenverarbeitungsanlage 3 sein. Sie können aber auch als separate Einheiten oder als Teile anderer, in Fig. 1 nicht dargestellter Datenverarbeitungseinheiten ausgestaltet sein. Bei den Datenspeichern 1, 2 kann es sich um unterschiedliche Speicherbereiche desselben physikalischen Speichers (z.B. einer Festplatte der Datenverarbeitungsanlage 3) handeln.

Im vorliegenden Beispiel sollen bei der Erzeugung der Kartendaten 2 für eine Großstadt drei Zonen a, b, c berücksichtigt werden, in denen unterschiedliche Vorgaben herrschen. Die Lage der drei Zonen a, b, c ist vereinfacht und schematisch in Fig. 2 gezeigt.

In einer innerstädtischen ersten Zone a ist der verbrennungsmotorische Betrieb von Kraftfahrzeugen generell untersagt. Zulässig ist beispielsweise der Betrieb von HEVs im elektronischen Antriebsmodus.

In einer zweiten Zone b, die ringförmig um die erste Zone a angeordnet ist, ist der verbrennungsmotorische Betrieb von Kraftfahrzeugen mit einem gemischten Anteil von höchstens 50 Prozent zulässig. Werktags (Montag bis Freitag, kurz "Mo-Fr") von 07:00 Uhr bis 09:00 Uhr ist der verbrennungsmotorische Betrieb von Kraftfahrzeugen gänzlich untersagt.

In einer dritten Zone c, die ringförmig um die zweite Zone b angeordnet ist, besteht keine (behördliche) Vorgabe bezüglich der Antriebsart. Es kann jedoch trotzdem sinnvoll sein, die in der dritten Zone c liegenden Kartenobjekte in der digitalen Karte mit einem Wert des Attributs zu kennzeichnen. Auf diese Weise kann beispielsweise ein Energiemanagementsystem eines HEVs erkennen, dass es sich in einer Randzone (c) zu einer bezüglich der Antriebsart beschränkten Zone (b) befindet. Daraus kann beispielsweise gefolgert werden, dass bald (nämlich mit Einfahrt in die Zone b) die Batterie des HEVs zum Antrieb benötigt werden wird. Es kann somit beispielsweise die Maßnahme abgeleitet werden, das HEV in Zone c ausschließlich verbrennungsmotorisch zu betreiben, um die Batterie nicht weiter zu entladen oder sogar aufzuladen.

Tabelle I zeigt ein schematisches Beispiel eines entsprechenden Regelsatzes 4. Die erste Spalte ("Zone") dient nur dem besseren Verständnis des Beispiels und muss im tatsächlichen Regelsatz 4 nicht enthalten sein.

**Tabelle I: Regelsatz 4**

| **Zone** | **Geografischer Bereich** | **A1** | **A2** |
|---|---|---|---|
| a | [a₁; a₂; ... ; aₙ] | 1 | - |
| b | [b₁; b₂; ...; bn] **-** [a₁; a₂; ... ; aₙ] | 1 | Mo-Fr, 07:00-09:00 |
| b | [b₁; b₂; ...; bₙ] - [a₁; a₂; ...; aₙ] | 2; 50% | andere Zeiten |
| c | [c₁; c₂; ... ; cₙ]-[b₁; b₂; ...;bₙ] | 3 | - |

Die beschriebenen drei Zonen a, b, c werden durch Polygone beschrieben, welche durch die in der Spalte "Geografischer Bereich" angegebenen geografischen Koordinaten bestimmt werden. Das durch die Koordinaten [c₁; c₂; ...; cₙ] bestimmte Polygon umfasst vollständig das durch die Koordinaten [b₁; b₂; ...; bₙ] bestimmte Polygon, welches seinerseits vollständig das durch die Koordinaten [c₁; c₂; ...; cₙ] bestimmte Polygon umfasst. Die Notation [b₁; b₂; ...; bₙ] - [a₁; a₂; ...; aₙ] beschreibt somit ein näherungsweise ringförmiges Gebiet. Es werden also durch die geografischen Bereichsangaben in Tabelle I die drei Zonen a, b, c abgebildet. Fig. 2 zeigt die Zonen a, b, c in vereinfachter und schematischer Darstellung, wobei die Koordinaten nicht gesondert bezeichnet sind.

Die Spalte "A1 der Tabelle I enthält den Wert des (ersten) Attributs. Die Spalte "A2" enthält den Wert des weiteren Attributs.

Beim Ablauf der hierin vorgestellten Ausführungsform des erfindungsgemäßen Verfahrens wird nun für jeden Link der Rohdaten 1 geprüft, ob dessen geografische Positionsangabe mindestens teilweise innerhalb eines der im Regelsatz 4 hinterlegten geografischen Bereiche liegt. Mit anderen Worten wird also für jeden in den Rohdaten 1 enthaltenen Straßenabschnitt geprüft, ob dieser wenigstens teilweise in (zumindest) einer der Zonen a, b oder c liegt. Falls dies zutrifft, so wird dem Link der entsprechende Wert des ersten Attributs zugewiesen.

Liegt beispielsweise ein Link in der Zone a, so wird ihm der Wert A1=1 des ersten Attributs A1 zugewiesen. Dieser Wert A1=1 repräsentiert die Vorgabe, das Kraftfahrzeug ausschließlich elektromotorisch zu betreiben.

Liegt ein Link in der Zone b, so wird ihm ebenfalls der Wert A1=1 des ersten Attributs A1 zugewiesen; ferner wird der Wert A2="Mo-Fr, 07:00-09:00" als Wert des weiteren Attributs A2 zugewiesen. Diese beiden Werte werden in den Kartendaten 2 derart miteinander verknüpft, dass erkennbar ist, dass der Wert des weiteren Attributs A2 eine zeitliche Einschränkung des Werts des ersten Attributs A1 bedeutet. Die beiden miteinander verknüpften Werte der Attribute A1, A2 können als ein Attribute-Datensatz bezeichnet werden.

Gemäß Tabelle I wird einem in der Zone b gelegenen Link noch ein weiterer Attribute-Datensatz zugewiesen. Bei diesem ist der Wert des ersten Attributs A1="2; 50%". Dieser Wert A1="2; 50%" repräsentiert die Vorgabe, das Kraftfahrzeug (zeitlich oder bezüglich der Antriebsleistung) mit einem elektromotorischen Anteil von mindestens 50% zu betreiben. Ferner wird der Wert A2="andere Zeiten" zugewiesen. Diese Angabe übersetzt der Kartencompiler 3 beim Erzeugen der digitalen Karte 2 in die entsprechenden Zeiträume (nämlich alle Zeiten außer Mo-Fr, 07:00-09:00). Auch diese beiden Werte der Attribute A1, A2 sind miteinander verknüpft. Im Ergebnis gelten für den in der Zone b gelegenen Link also abhängig von Wochentag und Tageszeit zwei unterschiedliche Vorgaben.

Einem weiteren beispielhaften Link, der in Zone c liegt, wird der Wert A1=3 des ersten Attributs A1 zugewiesen. Dieser Wert A1=3 bedeutet, dass keinerlei Vorgaben bezüglich der Antriebsart des Kraftfahrzeugs bestehen, dass aber der Link mit diesem Wert in einer Zone liegt, die an eine Zone mit derartigen Vorgaben angrenzt (in diesem Beispiel Zone b). Ein Energiemanagement eines HEV kann diese Information beispielsweise nutzen, um das HEV rein verbrennungsmotorisch zu betreiben und dabei die Batterie des Fahrzeugs aufzuladen, damit es bei Eintritt in die Zone b die dort bestehenden Anforderungen erfüllen kann.

In Fig. 1 ist neben dem Regelsatz 4 noch ein weiterer Regelsatz 5 dargestellt. Dies soll symbolisch verdeutlichen und klarstellen, dass bei der Erzeugung der digitalen Karte 2 noch zahlreiche weitere Regelsätze 5 vom Kartencompiler 3 verwendet werden können, was aber nicht wesentlich für die vorliegende Erfindung ist.

### Bezugszeichenliste

1 Rohdaten der digitalen Karte
2 Kartendaten
3 Datenverarbeitungsanlage (Compiler)
4 Regelsatz Antriebsart
5 Weiterer Regelsatz
a, b, c Geografische Bereiche

## Patentansprüche

1. Verfahren zur Erzeugung von Kartendaten (2) einer digitalen Karte aus Rohdaten (1) der digitalen Karte, wobei die Rohdaten (1) zumindest ein Kartenobjekt umfassen, wobei zur Erzeugung der Kartendaten (2) dem zumindest einen Kartenobjekt ein Wert eines Attributs zugewiesen werden kann, **dadurch gekennzeichnet, dass** das Attribut eine das Kartenobjekt betreffende Antriebsart eines Kraftfahrzeugs betrifft.

2. Verfahren nach Anspruch 1, **dadurch gekennzeichnet, dass** die Antriebsart einen Energieträger und / oder eine Bauart eines Antriebsmotors und / oder ein Abgasnachbehandlungssystem und / oder eine Schadstoffemissionseigenschaft und / oder eine akustische Emissionseigenschaft des Kraftfahrzeugs betrifft.

3. Verfahren nach einem der vorhergehenden Ansprüche, wobei das Attribut eine das Kartenobjekt betreffende vorgeschriebene oder unzulässige Antriebsart des Kraftfahrzeugs betrifft.

4. Verfahren nach einem der vorhergehenden Ansprüche, wobei dem Attribut ein Wert für eine gemischte, insbesondere zeitlich gemischte und / oder in Bezug auf einen Energieträger und / oder eine Bauart eines Antriebsmotors gemischte, Antriebsart zugewiesen werden kann.

5. Verfahren nach einem der vorhergehenden Ansprüche, wobei zur Erzeugung der Kartendaten (2) dem zumindest einen Kartenobjekt ein Wert eines weiteren Attributs zugewiesen werden kann, wobei das weitere Attribut eine zeitliche Gültigkeit des ersten Attributs betrifft.

6. Verfahren nach einem der vorhergehenden Ansprüche, wobei das zumindest eine Kartenobjekt ein Straßenabschnitt ist oder einen Straßenabschnitt umfasst.

7. Verfahren nach einem der vorhergehenden Ansprüche, wobei die Rohdaten (1) zumindest eine dem zumindest einen Kartenobjekt zugeordnete geografische Positionsangabe umfassen, wobei dem zumindest einen Kartenobjekt ein Wert eines Attributs in Abhängigkeit der geografischen Positionsangabe zugewiesen werden kann.

8. Verfahren nach Anspruch 7, wobei zur Erzeugung der Kartendaten (2) ein Regelsatz (4) verwendet wird, wobei der Regelsatz (4) jeweils einen Wert des Attributs in Abhängigkeit zumindest einer geografischen Bereichsangabe eines geografischen Bereichs vorgibt, wobei für das zumindest eine Kartenobjekt geprüft wird, ob die dem Kartenobjekt zugeordnete geografische Positionsangabe mindestens teilweise innerhalb des geografischen Bereichs liegt, wobei in diesem Fall der durch den Regelsatz (4) vorgegebene Wert des Attributs zugewiesen wird.

9. Verfahren nach Anspruch 8, wobei die geografische Bereichsangabe ein durch zumindest drei geografische Koordinaten bestimmtes Polygon ist.

10. Datenverarbeitungsanlage (3) zur Erzeugung von Kartendaten (2) einer digitalen Karte aus Rohdaten (1) der digitalen Karte, wobei die Datenverarbeitungsanlage (3) zur Durchführung des Verfahrens nach einem der vorhergehenden Ansprüche eingerichtet ist.
